# EUROPEAN PATENT APPLICATION

(11) **EP 3 431 745 A1**
(43) Date of publication of application: **23.01.2019**
(21) Application number: 17182404.8
(22) Date of filing: 20.07.2017
(51) Int. Cl.: F02M 21/02, F02B 19/10, F02B 19/12, F02B 19/18

(54) **SPARK PLUG FOR AN INTERNAL COMBUSTION ENGINE**

(71) Applicant: Caterpillar Energy Solutions GmbH, 68167 Mannheim (DE)
(72) Inventor: Maier, Thomas, 68526 Ladenburg (DE); Veltmann, Matthias, 68623 Lampertheim (DE)
(74) Representative: Kramer Barske Schmidtchen Patentanwälte PartG mbB

(57) **Abstract**

The present disclosure relates to a method of cooling the electrodes of a spark plug (30) provided in a pre-chamber (34). The spark plug (30) is provided with a fuel inlet (57) formed in a surface of a spark plug body (50). The fuel inlet (57) is configured to receive a supply of gaseous fuel from a fuel supply channel (74) formed in a pre-chamber body (28) to which the spark plug (30) is mounted. The fuel received via the fuel inlet (57) is supplied to an inner space of the spark plug body (50) and discharged via a fuel outlet (55) provided at an end face of the same. The discharged fuel flows past at least part of an electrode assembly (52) of the spark plug (30) to cool the same.

## Description

### Technical Field

The present disclosure generally relates to an internal combustion engine, and more particularly to a spark plug for an internal combustion engine.

### Background

Gaseous fuel internal combustion engines powered with a lean mixture of gaseous fuel and air may comprise a pre-combustion chamber (also referred to as pre-chamber) per cylinder for ignition purposes. Particularly, large-bore engines may benefit from these pre-chambers, as it is otherwise difficult to consistently achieve complete and thorough combustion using lean fuel/air mixtures.

Typically, such a pre-chamber is fluidly connected to a main combustion chamber of a respective cylinder via a riser channel and a plurality of flow transfer channels. The flow transfer channels and the riser channel allow the flow of the lean mixture of gaseous fuel and air from the main combustion chamber into the pre-chamber during a compression stroke. Enrichment of the lean mixture in the pre-chamber may be effected by supplying a small quantity of (gaseous) fuel to the pre-chamber via a separate fuel supply passage, for example, during the intake stroke. The enriched mixture is ignited in the pre-chamber by an ignition device such as a spark plug. The ignition of the enriched mixture causes a flame front of hot gases that propagates from the pre-chamber via the flow transfer channels into the main combustion chamber. Thus, the lean mixture in the main combustion chamber ignites and bums, and thereby expands against a movable piston that drives a crankshaft.

The present disclosure is directed, at least in part, to improving or overcoming one or more aspects of prior systems.

### Summary of the Disclosure

In one aspect, the present disclosure relates to a spark plug for a gaseous fuel internal combustion engine. The spark plug comprises a spark plug body extending along a longitudinal direction, a mounting portion provided on the spark plug body and configured to detachably mount the spark plug in a spark plug bore, and an electrode assembly provided at an end of the spark plug body in the longitudinal direction. A fuel inlet is formed in a surface of the spark plug body and configured to receive a supply of gaseous fuel, and a fuel outlet is formed in the end of the spark plug body. The fuel outlet is fluidly communicated with the fuel inlet and configured to discharge the gaseous fuel received at the fuel inlet from the spark plug.

According to another aspect, the present disclosure relates to a pre-chamber assembly for an internal combustion engine. The pre-chamber assembly comprises a pre-chamber body defining a pre-chamber. A fuel supply device is accommodated in the pre-chamber body and configured to supply gaseous fuel to the pre-chamber. A spark plug according to the above aspect is mounted in a spark plug bore formed in the pre-chamber body and is configured to ignite the gaseous fuel in the pre-chamber. A fuel supply channel extends from the fuel supply device towards the spark plug bore and configured to supply the gaseous fuel from the fuel supply device to the fuel inlet of the spark plug.

In yet another aspect, the present disclosure relates to a gaseous fuel internal combustion engine comprising a plurality of cylinders. A plurality of pre-chamber assemblies according to the above aspect are respectively mounted to cylinder heads of the plurality of cylinders.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic cross-sectional view of a portion of an internal combustion engine equipped with a pre-chamber assembly in accordance with the present disclosure;
Fig. 2 shows a schematic cross-sectional view of a pre-chamber body including a spark plug in accordance with the present disclosure;
Fig. 3 shows an enlarged partial cross-sectional view of a pre-chamber body having a spark plug mounted therein in accordance with the present disclosure;
Fig. 4 shows a partial cross-sectional view of a spark plug in accordance with the present disclosure;
Fig. 5 shows a cross-sectional view along the line V-V in Fig. 4; and
Fig. 6 shows a cross-sectional view according to a modification of the configuration shown in Fig. 5.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that, in a lean operated gas engine with electric ignition in an enriched pre-chamber, the ignition electrodes of the corresponding spark plug may be subjected to high thermal stress. This high thermal stress may result in damage to the electrodes and shorten the service life of the spark plug. In order to overcome this problem, it has been realized that it may be advantageous to supply the gaseous fuel not via a fuel supply channel formed in a pre-chamber body of the pre-chamber assembly, but via the spark plug. This may be achieved by providing a fuel inlet in a surface of the spark plug and supplying the fuel received at the fuel inlet to a recess formed in the end of the spark plug adjacent to the electrodes. In particular, an annular groove may be formed in the outer surface of the spark plug body, and a plurality of flow channels may supply the gaseous fuel from the annular groove to the inside of the recess. From the recess, the gaseous fuel may be discharged into the pre-chamber past the electrodes to cool the same. This is possible, because the gaseous fuel is generally cool with respect to the spark plug, in particular, the electrodes of the same.

The present disclosure is further based on the realization that the plurality of flow channels extending towards the center of the spark plug may advantageously be arranged in such a manner that a swirl is generated and/or the gaseous fuel is directed upwards or downwards. To this end, the flow channels may be arranged tangentially to introduce the swirl, and/or may be arranged inclined to the longitudinal axis of the spark plug to impart the desired upward or downward momentum.

The present disclosure is further based on the realization that an efficient cooling of the electrodes can be achieved by supplying the gaseous fuel uniformly over the whole circumference of the spark plug. To this end, an annular groove or cavity is formed in the spark plug body to distribute the gaseous fuel that is supplied to the same in the circumferential direction before being supplied to the recess to be discharged towards the electrodes.

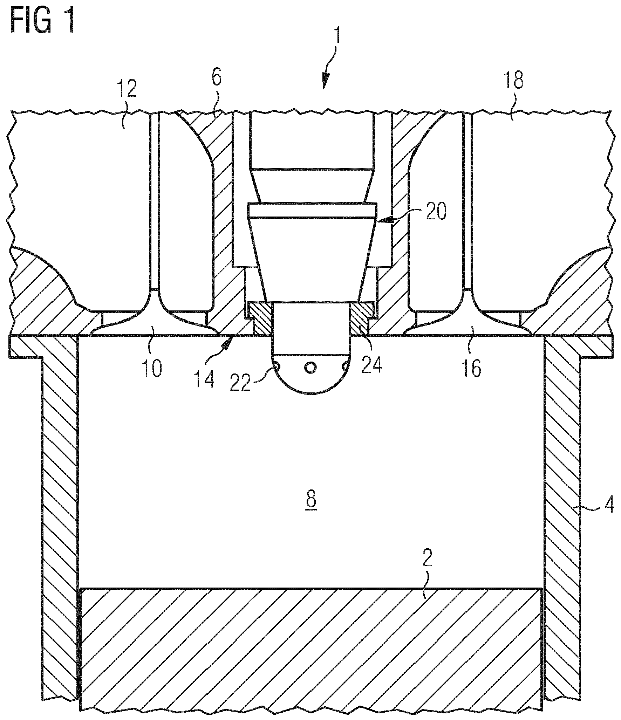

Referring now to the drawings, Fig. 1 depicts a piston 2 arranged in a cylinder 4 of a portion of an internal combustion engine 1 (not shown in further detail). The cylinder 4 is covered by a cylinder head 6. The piston 2, the cylinder 4, and the cylinder head 6 together define a main combustion chamber 8 of the internal combustion engine 1. The piston 2 is reciprocatingly arranged in the cylinder 4 to move between a top dead center (TDC) and a bottom dead center (BDC) during operation of the internal combustion engine 1.

For the purpose of describing exemplary embodiments of the present disclosure, the internal combustion engine 1 is considered as a four-stroke stationary or marine internal combustion engine operating at least in part on gaseous fuel, for example, a gaseous fuel engine or a dual fuel engine. One skilled in the art will appreciate, however, that the internal combustion engine may be any type of engine (turbine, gas, diesel, natural gas, propane, two-stroke, etc.) that would utilize the pre-chamber assembly as disclosed herein. Furthermore, the internal combustion engine may be of any size, with any number of cylinders, and in any configuration (V-type, in-line, radial, etc.). Moreover, the internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

The cylinder head 6 includes at least one inlet valve 10, for example, a poppet valve. The inlet valve 10 is accommodated in an inlet channel 12 opening in a piston-side face 14 of the cylinder head 6 for supplying a lean mixture of gaseous fuel and air into the main combustion chamber 8. Similarly, at least one outlet valve 16, for example, also a poppet valve, is accommodated in an outlet channel 18 of the cylinder head 6 to guide exhaust gas out of the main combustion chamber 8.

The cylinder head 6 further comprises a pre-chamber assembly 20. A plurality of flow transfer channels 22 fluidly connect the main combustion chamber 8 with an interior of the pre-chamber assembly 20.

The pre-chamber assembly 20 is installed in the cylinder head 6 via a mounting body 24 as shown in Fig. 1. Alternatively, the pre-chamber assembly 20 may be installed in the cylinder head 6 in any other appropriate fashion.

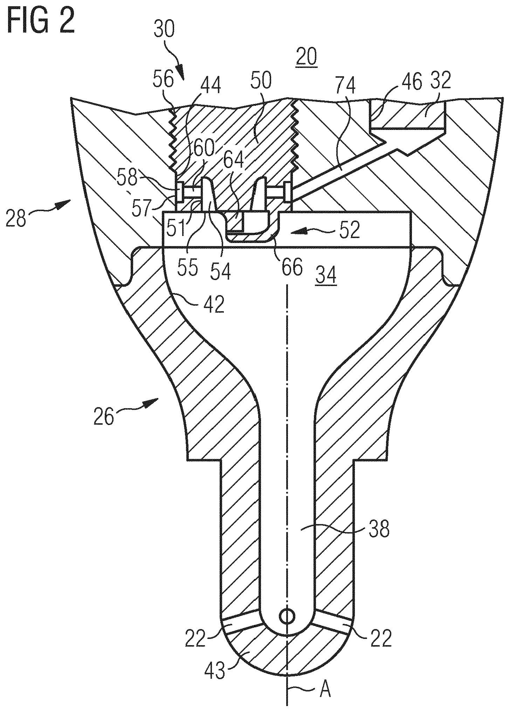

Referring to Fig. 2, a first embodiment of a pre-chamber assembly 20 is shown in a schematic cross-sectional view.

The pre-chamber assembly 20 includes a first pre-chamber body 26, a second pre-chamber body 28, a spark plug 30, and a fuel supply device 32. The first pre-chamber body 26 and the second pre-chamber body 28 are connected to one another. The spark plug 30 and the fuel supply device 32 are accommodated in the second pre-chamber body 28

The first pre-chamber body 26 includes and defines a pre-chamber 34, a riser channel 38 and the flow transfer channels 22. In an assembled state, the flow transfer channels 22 fluidly connect an interior of the pre-chamber body 26 (the pre-chamber 34 and the riser channel 38) and the main combustion chamber 8 (Fig. 1).

As can be seen in Fig. 2, a diameter of the pre-chamber 34 is greater than a diameter of the riser channel 38, which in turn is greater than a diameter of the flow transfer channels 22

The pre-chamber 34 extends along a longitudinal axis A of the first pre-chamber body 26, is funnel-shaped, and tapers towards the riser channel 38. Alternatively, the pre-chamber 34 may have any other shape such as a cylindrical shape, a pyramidal shape, a conical shape, and combinations thereof. For example, the pre-chamber 34 may have a volume within a range between 0,1 % and 10 % of the compression volume of the cylinder 4 (see Fig. 1).

A bottom section of the pre-chamber 34 smoothly transitions into the riser channel 38. The riser channel 38 longitudinally extends in the first pre-chamber body 26, and opens with one end in the pre-chamber 34. In the configuration shown in Fig. 2, the riser channel 38 is aligned with the pre-chamber longitudinal axis A. Alternatively, the riser channel 38 may run parallel to the pre-chamber longitudinal axis A, or may confine an angle with the pre-chamber longitudinal axis A. The riser channel 38 fluidly connects the pre-chamber 34 and the flow transfer channels 22.

To fluidly connect a bottom section of the riser channel 38 and a top section of the main combustion chamber 8 (see Fig. 1), the flow transfer channels 22 are provided. The flow transfer channels 22 extend through a tip portion 43 of the first pre-chamber body 26.

In some embodiments, the flow transfer channels 22 may directly open in the pre-chamber 34. In other words, a riser channel fluidly interconnected between the pre-chamber and the flow transfer channels may be omitted.

The spark plug 30 is installed in the pre-chamber assembly 20 so that the spark plug 30 is operably coupled to the pre-chamber 34.

As used herein, "operably coupled" means that the spark plug 30 is configured and arranged to ignite an ignitable mixture in the pre-chamber 34. For example, the spark plug 30 may extend into the pre-chamber 34. Specifically, electrodes 64, 66 of the spark plug 30 may reach into the pre-chamber 34 so that a spark between the electrodes 64, 66 ignites a mixture in the pre-chamber 34. The spark plug 30 may be mounted in a spark plug bore 44 formed in the first and/or second pre-chamber body 26, 28.

The fuel supply device 32 is mounted in a fuel supply bore 46 extending through the second pre-chamber body 28. Alternatively, the fuel supply device 32 may be mounted in the first pre-chamber body 26. The fuel supply device 32 is configured to supply a fuel, for example a gaseous fuel, or a rich mixture of fuel and air to the pre-chamber 34 for enriching the same.

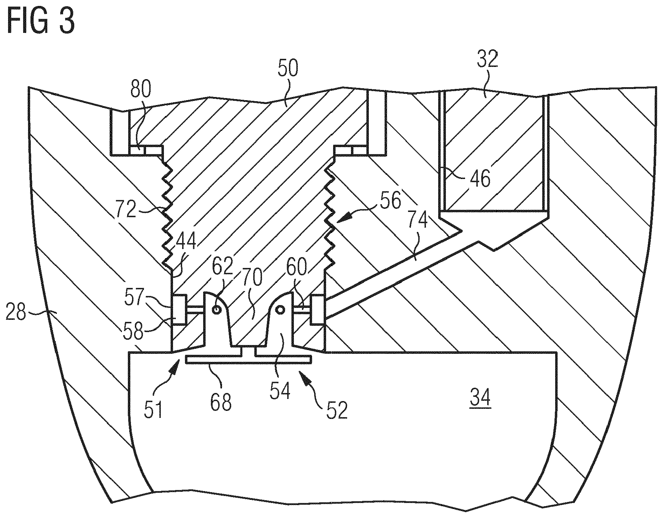

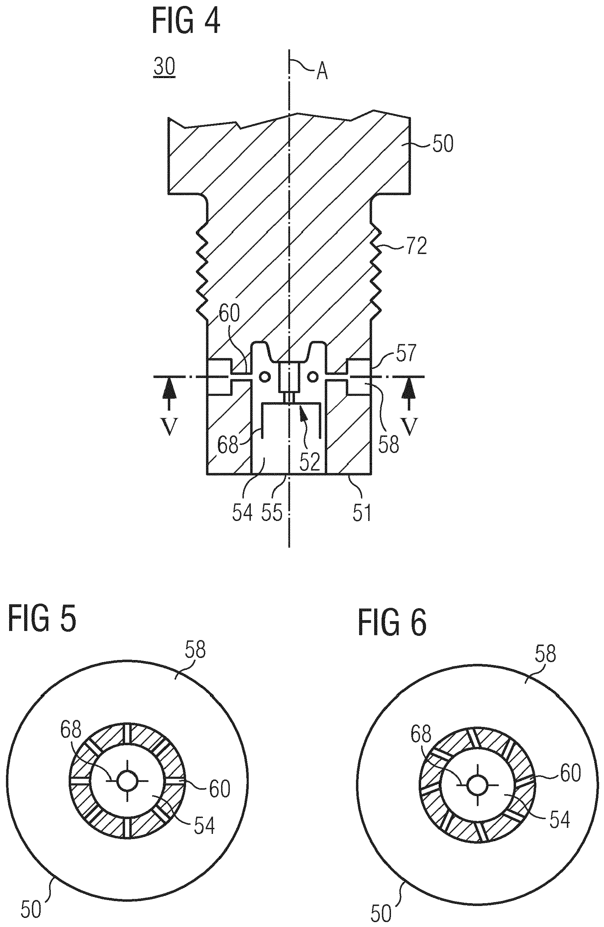

As shown in Fig. 2, the spark plug 30 comprises a spark plug body 50 that extends substantially along the longitudinal direction A. A mounting portion 56 is provided on the spark plug body 50 and configured to detachably mount the spark plug 30 in the spark plug bore 44. In some embodiments, the mounting portion 56 is configured as a male threaded portion 72 (see Figs. 3 and 4) that is provided on the spark plug body 50.

An electrode assembly 52 is provided at an end 51 of the spark plug body 50 in the longitudinal direction A. In some embodiments, as shown in Fig. 2, the electrode assembly 52 may comprise a center electrode 64 and a hook-shaped ground electrode 66. It will be appreciated, however, that in other embodiments different configurations may be used for the electrode assembly 52. Several other examples will be discussed in more detail below.

As shown in Fig. 2, the spark plug body 50 comprises a fuel inlet 57 formed in a surface of the spark plug body 50. In the example shown in Fig. 2, the fuel inlet 57 is an opening of an annular groove 58 formed in an outer circumferential surface of the spark plug body 50.

The fuel inlet 57, i.e., the annular groove 58, is configured to receive a supply of gaseous fuel from the fuel supply device 32. To this end, a fuel supply channel 74 extends from the fuel supply device 32 to an inner surface of the spark plug bore 44 and opens in the same at a position in the longitudinal direction A that corresponds to the position of the fuel inlet 57 (the annular groove 58). Therefore, in accordance with the opening/closing of the valve that forms the fuel supply device 32, for example, a solenoid valve, gaseous fuel is selectively supplied to the fuel inlet 57, in particular, to the annular groove 58 formed in the spark plug body 50. It will be appreciated that, in some embodiments, one or more seals may be provided between the spark plug body 50 and the pre-chamber body 26, 28 on one or both sides of the fuel inlet 57 in the longitudinal direction to prevent a leakage of fuel (see, for example, the seal 80 shown in Fig. 3 described below).

The spark plug body 50 further includes a fuel outlet 55 formed in an end face of the same at the end 51. As shown in Fig. 2, the fuel outlet 55 is fluidly communicated with the fuel inlet 57. Further, the fuel outlet is configured such that the gaseous fuel received at the fuel inlet 57 is discharged from the fuel outlet 55 past at least part of the electrode assembly 52.

In order to facilitate discharging of the gaseous fuel from the fuel outlet 55, a recess 54 is formed in the end 51 of the spark plug body 50. The recess 54 may be configured as an annular recess 54 that surrounds a central electrode support 70 (see Fig. 3) that supports at least part of the electrode assembly 52 and generally comprises an insulator provided around a center electrode of the spark plug 30. The support 70 with the insulator may have any appropriate configuration, depending on the configuration of the electrode assembly 52, and the detailed configuration of the same is therefore not shown in the figures. A plurality of flow channels 60 are formed in the spark plug body 50 and fluidly connect the annular groove 58 to the interior of the recess 54. In this manner, gaseous fuel that enters the annular groove 58 flows through the plurality of flow channels 60 towards the interior of the recess 54, and is discharged from the interior of the recess 54 via the fuel outlet 55 formed in the end face of the spark plug body 50. In this manner, the discharged gaseous fuel can cool the electrodes 64, 66 of the electrode assembly 52.

Fig. 3 shows the configuration of the spark plug body 50 in more detail. It should be noted that the electrode assembly 52 in Fig. 3 has a different configuration than the electrode assembly shown in Fig. 2, namely, is configured as a cross-shaped center electrode 68. The ground electrode is omitted, because the spark plug body 50 serves as ground during the ignition.

As shown in Fig. 3, the plurality of flow channels 60 extend essentially radially from the annular groove 58 towards the recess 54 and are distributed about the circumferential direction. In particular, as shown in Fig. 3, openings 62 of the plurality of flow channels 60 into the recess 54 are provided at positions that are further towards the bottom of the recess 54 (the upper side of the spark plug body 50) than the electrode 68 of the electrode assembly 52. Further, the fuel inlet 57 and the associated annular groove 58 are both provided in the spark plug body 50 at a position between the mounting portion 56 and the end 51 in the longitudinal direction. As shown in Fig. 3, the spark plug is mounted to the pre-chamber body 28 via engagement of the male threaded portion 72 with a corresponding female threaded portion (not shown) in the spark plug bore 44. A stepped portion formed in the spark plug body 50 is sealingly engaged with a corresponding stepped portion provided in the pre-chamber body 28 via a seal 80. It will be appreciated that in other embodiments a different sealing mechanism may be used. For example, a tapered sealing surface may be provided in the outer surface of the spark plug 30 and come into contact with a mating sealing surface of the pre-chamber body 28. For example, the tapered sealing surface may be provided near the end 51, in particular, between the fuel inlet 57 and the fuel outlet 55 in the longitudinal direction. In this case, a further seal or sealing surface may be provided in an outer surface of the spark plug body 50 on the side of the fuel inlet 57 opposite to the tapered sealing surface. As shown in Fig. 3, in particular when a cross-shaped electrode 68 is used, the electrode can be efficiently cooled with the gaseous fuel that is supplied to the recess 54 provided around the support 70 and discharged from the same into the pre-chamber 34.

In other embodiments, as shown in Fig. 4, the electrode assembly 52 may be disposed in the recess 54 formed in the end 51 of the spark plug body 50. For example, a cross-shaped electrode 68 with a bent electrode cross can be conveniently arranged in the recess 54. As already mentioned, any appropriate electrode configuration can be used, as long as the fuel that is supplied to the spark plug 30 flows past at least part of the electrode assembly 52 to cool the same.

Fig. 5 shows a cross-section along the line V-V in Fig. 4, which cross-section shows the arrangement of the plurality of flow channels 60 in more detail. In Fig. 5, as mentioned above, the plurality of flow channels 60 extends essentially radially, at substantially equal intervals in the circumferential direction. Further, as shown in Fig. 4, the flow channels 60 extend along a direction that is substantially perpendicular to the longitudinal direction A.

It will be appreciated, however, that different arrangements of the plurality of flow channels 60 can also be used. For example, in the modification shown in Fig. 6, the plurality of flow channels extend at an angle with respect to the radial direction, for example, at an angle of between 1° and 45°, preferably between 10° and 30°. Further, although this is not shown in Figs. 4 to 6, the plurality of flow channels 60 may also extend such that they are upwardly or downwardly inclined with respect to the longitudinal direction A, at an inclination angle of between 1° and 90°, preferably between 10° and 45°.

Although in the embodiments described above the spark plug 30 includes the annular groove 58 formed in an outer peripheral surface of the spark plug body 50, it will be appreciated that, in other embodiments, a different configuration for the fuel inlet 57 and the flow passages communicating the fuel inlet 57 with the fuel outlet 55 can be used. For example, in some embodiments, the fuel inlet 57 may be implemented as a single opening or a plurality of openings associated with the single fuel supply channel 74 formed in the pre-chamber body 28 or a corresponding plurality of fuel supply channels. Further, the respective openings may be directly connected to the recess 54 or the fuel outlet 55 by corresponding flow passages. In other words, the annular groove 58 and/or the recess 54 may be omitted.

In other modifications, an annular cavity may be provided in the spark plug body 50, which annular cavity may be communicated with one or more openings in the outer surface of the spark plug body 50 which form the fuel inlet 57. In this manner, the gaseous fuel entering via the fuel inlet 57 can also be distributed in the circumferential direction before being supplied to the recess 54 formed in the end 51 of the spark plug body 50. In this case, such an annular cavity may again be connected to the recess 54 by the plurality of flow channels 60 discussed above, or by any other appropriate flow passage configuration.

In other embodiments, an annular groove may be formed in an inner surface of the spark plug bore 44 at a position that corresponds to the fuel inlet 57, which may again be configured as a plurality of openings respectively connected to the plurality of flow channels 60. In such an embodiment, a corresponding seal has to be arranged between the spark plug body 50 and the pre-chamber body 28 at least on the side of the fuel inlet 57 opposite to the end 51 to prevent a leakage of fuel.

Further, it will be understood that the spark plug body 50 described above does not necessarily have to be configured as a single member, but may comprise a plurality of members connected to each other in any appropriate configuration that allows for mounting of the electrode assembly, one or more insulators, electrical connections, etc. required for performing the ignition, as well as the provision of the fuel inlet 57, the fuel outlet 55 and the passages connecting the same.

With the embodiments described above, the electrodes of the electrode assembly 52 can be efficiently cooled by the gaseous fuel that is supplied to the spark plug 30 before being discharged from the fuel outlet 55 of the same into the pre-chamber 34 for combustion.

### Industrial Applicability

The spark plug 30 as exemplarily disclosed herein is particularly applicable to gaseous fuel internal combustion engines running on a lean mixture of gaseous fuel and air. However, as one skilled in the art will appreciate, the spark plug 30 as described herein may be used in other engine configurations and types as well.

Generally, a gaseous fuel internal combustion engine for use with the teachings of the present disclosure comprises a plurality of cylinders and a plurality of pre-chamber assemblies. Each pre-chamber assembly comprises a pre-chamber body defining a pre-chamber, a fuel supply device accommodated in the pre-chamber body and configured to supply gaseous fuel to the pre-chamber, and a spark plug in accordance with the present disclosure mounted in a spark plug bore formed in the pre-chamber body and configured to ignite the gaseous fuel in the pre-chamber. A fuel supply channel extends from the fuel supply device of each pre-chamber assembly towards the corresponding spark plug bore and is configured to supply the gaseous fuel from the fuel supply device to the fuel inlet of the spark plug. The plurality of pre-chamber assemblies configured as described above are respectively mounted to the cylinder heads of the plurality of cylinders of the gaseous fuel internal combustion engine.

It should be noted that, while the embodiments have been described with respect to a spark plug provided for a pre-chamber, in other embodiments, the spark plug may also be provided for an engine that does not have a pre-chamber. In other words, the spark plug disclosed herein may be arranged in a main combustion chamber of the engine. Further, while the present embodiments have been described with respect to the supply of gaseous fuel, it will be appreciated that in some embodiments different types of fuel can be used to cool the electrode assembly 52, for example, liquid fuels, and/or a mixture of gaseous fuel and/or liquid fuel and air.

Terms such as "about", "around", "approximately", or "substantially" as used herein when referring to a measurable value such as a parameter, an amount, a temporal duration, and the like, is meant to encompass variations of ±10% or less, preferably ±5% or less, more preferably ±1% or less, and still more preferably ±0.1% or less of and from the specified value, insofar as such variations are appropriate to perform in the disclosed invention. It is to be understood that the value to which the modifier "about" refers is itself also specifically, and preferably, disclosed. The recitation of numerical ranges by endpoints includes all numbers and fractions subsumed within the respective ranges, as well as the recited endpoints.

Although the preferred embodiments of this invention have been described herein, improvements and modifications may be incorporated without departing from the scope of the following claims.

## Claims

1. A spark plug (30) for a gaseous fuel internal combustion engine (1), the spark plug (30) comprising:
a spark plug body (50) extending along a longitudinal direction (A);
a mounting portion (56) provided on the spark plug body (50) and configured to detachably mount the spark plug (30) in a spark plug bore (44);
an electrode assembly (52) provided at an end (51) of the spark plug body (50) in the longitudinal direction (A);
a fuel inlet (57) formed in a surface of the spark plug body (50) and configured to receive a supply of gaseous fuel; and
a fuel outlet (55) formed in the end (51) of the spark plug body (50), the fuel outlet (55) being fluidly communicated with the fuel inlet (57) and configured to discharge the gaseous fuel received at the fuel inlet (57) from the spark plug (30).

2. The spark plug of claim 1, further comprising:
an annular groove (58) or cavity formed in the spark plug body (50) and fluidly communicated with the fuel inlet (57);
a recess (54) formed in the end (51) of the spark plug body (50) and fluidly communicated with the fuel outlet (55); and
a plurality of flow channels (60) fluidly connecting the annular groove (58) or cavity to the interior of the recess (54).

3. The spark plug of claim 2, wherein the plurality of flow channels (60) extend substantially radially.

4. The spark plug of claim 2, wherein the plurality of flow channels extend at an angle of between 1° and 45°, preferably between 10° and 30°, with respect to the radial direction.

5. The spark plug of any one of claims 2 to 4, wherein the plurality of flow channels (60) extend along a direction that is substantially perpendicular to the longitudinal direction (A).

6. The spark plug of any one of claims 2 to 4, wherein the plurality of flow channels are upwardly or downwardly inclined with respect to the longitudinal direction, at an inclination angle of between 1° and 90°, preferably between 10° and 45°.

7. The spark plug of any one of claims 2 to 6, wherein openings (62) of the plurality of flow channels (60) into the recess (54) are provided at positions further towards the bottom of the recess (54) than electrodes (64, 66, 68) of the electrode assembly (52).

8. The spark plug of any one of claims 2 to 7, wherein the electrode assembly (52) is disposed at least in part in the recess (54).

9. The spark plug of any one of claims 2 to 8, wherein the recess (54) includes an annular portion that extends around a central electrode support (70) supporting the electrode assembly (52).

10. The spark plug of any one of claims 1 to 9, wherein the fuel inlet (57) is provided in the spark plug body (50) between the mounting portion (56) and the end (51) in the longitudinal direction.

11. The spark plug of any one of claims 1 to 10, wherein the mounting portion (56) is configured as a male threaded portion (72) provided on the spark plug body (50).

12. A pre-chamber assembly (20) for an internal combustion engine (1), comprising:
a pre-chamber body (26, 28) defining a pre-chamber (34);
a fuel supply device (32) accommodated in the pre-chamber body (26, 28) and configured to supply gaseous fuel to the pre-chamber (34);
a spark plug (30) according to any one of claims 1 to 11 mounted in a spark plug bore (44) formed in the pre-chamber body (26, 28) and configured to ignite the gaseous fuel in the pre-chamber (34); and
a fuel supply channel (74) extending from the fuel supply device (32) towards the spark plug bore (44) and configured to supply the gaseous fuel from the fuel supply device (32) to the fuel inlet (57) of the spark plug body (50).

13. The pre-chamber assembly of claim 12, further comprising an annular distribution groove formed in the inner surface of the spark plug bore (44) and fluidly connected to the fuel supply channel (74).

14. The pre-chamber assembly of claim 12 or 13, wherein the fuel supply device (32) is a valve such as a solenoid valve mounted in a fuel supply bore (46) formed in the pre-chamber body (26, 28).

15. A gaseous fuel internal combustion engine (1) comprising:
a plurality of cylinders; and
a plurality of pre-chamber assemblies (20) according to any one of claims 12 to 14 respectively mounted to cylinder heads (6) of the plurality of cylinders.
